# EUROPEAN PATENT APPLICATION

(11) **EP 2 818 354 A1**
(43) Date of publication of application: **31.12.2014**
(21) Application number: 13751629.0
(22) Date of filing: 13.02.2013
(51) Int. Cl.: B60L 3/00, B60L 15/20

(54) **DRIVE CONTROL DEVICE FOR VEHICLE**

(30) Priority: 24.02.2012 JP 2012038670
(71) Applicant: Nissan Motor Co., Ltd, Yokohama-shi, Kanagawa 221-0023 (JP)
(72) Inventor: SENOO, Takashi, Atsugi-shi, Kanagawa 243-0123 (JP)
(74) Representative: Hoefer & Partner
(86) International application number: PCT/JP2013/053315
(87) International publication number: WO 2013/125402

(57) **Abstract**

A drive control apparatus for a vehicle is provided. The apparatus, in which a pair of left and right driving wheels are driven independently of each other, is capable of evaluating whether drive force failure has occurred in one drive system.

In the drive control apparatus for a vehicle according to the invention, a drive force failure evaluation means (FIG. 2) evaluates that drive force failure has occurred in a left drive system when (drive system differential rotation ΔN) produced between a rotation speed on the side where a left drive means (left motor/generator) (2A), which drives a left driving wheel RL, operates (drive source rotation speed N2) and a rotation speed on the side where the left driving wheel RL rotates (driving wheel rotation speed N1) is greater than or equal to a predetermined threshold TH, and evaluates that drive force failure has occurred in a right drive system when a difference in rotation speed (drive system differential rotation ΔN) produced between a rotation speed on the side where a right drive means (right motor/generator) (2B), which drives a right driving wheel RR, operates (drive source rotation speed N2) and a rotation speed on the side where the right driving wheel RR rotates (driving wheel rotation speed N1) is greater than or equal to the threshold TH.

## Description

### Technical Field

The present invention relates to a drive control apparatus for a vehicle in which a pair of left and right driving wheels are driven independently of each other.

### Background Technology

There is a known electric vehicle that has a drive motor provided in each of a pair of left and right driving wheels and causes the drive motors to drive left and right driving wheels independently of each other (see Patent Document 1, for example).

### Prior Art Documents

### Patent Documents

Patent Document 1: Japanese Patent Laid-Open No. 2008-37355

### Disclosure of the Invention

### Problems to Be Solved by the Invention

Driving the left and right driving wheels independently of each other is, however, problematic as follows: When one of the drive motors fails to provide an intended drive force, a drive force transmitted from the right driven wheel to a road surface and a drive force transmitted from the left driven wheel to the road surface undesirably differ from each other.

That is, the drive motor that drives the left driving wheel and the drive motor that drives the right driving wheel drive the respective wheels independently of each other. In this process, when a motor shaft of one of the drive motors, an axle shaft that rotates with the driving wheels, a gear in a reduction gear unit provided between each of the drive motors and the corresponding driving wheel, or any other component experiences significant wear, breakage, or any other failure, a drive system ranging from the one of the drive motors to the corresponding driving wheel may experience drive force failure in some cases.

When the one drive system experiences drive force failure, the driving wheel on the side where the drive force failure has occurred produces a greatly reduced drive force acting on a road surface, resulting in a difference in drive force between the left and right wheels. Further, if the vehicle keeps traveling with the difference in drive force between the left and right wheels, an intended behavior of the vehicle may undesirably occur, that is, the vehicle may drift toward the side where the drive force failure has occurred.

The invention has been contrived in view of the problem described above, and an object of the invention is to provide a drive control apparatus for a vehicle in which a pair of left and right driving wheels are driven independently of each other, the drive control apparatus capable of evaluating whether drive force failure has occurred in one drive system.

### Means Used to Solve the Above-Mentioned Problems

To achieve the object described above, a drive control apparatus for a vehicle according to the invention includes a left driving wheel and a right driving wheel, a left drive means, a right drive means, a first left rotation speed detection means, a second left rotation speed detection means, a first right rotation speed detection means, a second right rotation speed detection means, and a drive force failure evaluation means.

The left driving wheel and the right driving wheel are disposed on left and right sides of the vehicle.

The left drive means drives the left driving wheel.

The right drive means drives the right driving wheel.

The first left rotation speed detection means is provided in a left drive system ranging from the left drive means to the left driving wheel and detects a rotation speed on the side where the left drive means operates.

The second left rotation speed detection means is provided in the left drive system and detects a rotation speed on the left driving wheel side.

The first right rotation speed detection means is provided in a right drive system ranging from the right drive means to the right driving wheel and detects a rotation speed on the side where the right drive means operates.

The second right rotation speed detection means is provided in the right drive system and detects a rotation speed on the right driving wheel side.

The drive force failure evaluation means evaluates that drive force failure has occurred in the left drive system when a difference in rotation speed produced between a first left rotation speed detected by the first left rotation speed detection means and a second left rotation speed detected by the second left rotation speed detection means is greater than or equal to a predetermined threshold, and evaluates that drive force failure has occurred in the right drive system when a difference in rotation speed produced between a first right rotation speed detected by the first right rotation speed detection means and a second right rotation speed detected by the second right rotation speed detection means is greater than or equal to the threshold.

### Effect of the Invention

In the drive control apparatus for a vehicle according to the invention, the drive force failure evaluation means evaluates that drive force failure has occurred in the left drive system when a difference in rotation speed produced between the first left rotation speed detected by the first left rotation speed detection means and the second left rotation speed detected by the second left rotation speed detection means is greater than or equal to a predetermined threshold. Further, the drive force failure evaluation means evaluates that drive force failure has occurred in the right drive system when a difference in rotation speed produced between the first right rotation speed detected by the first right rotation speed detection means and the second right rotation speed detected by the second right rotation speed detection means is greater than or equal to the threshold.

That is, the drive force failure evaluation is made based on the rotation speed on the side where each of the drive means operates and the rotation speed on the side where the corresponding driving wheel rotates. As a result, the drive force failure evaluation can be readily made irrespective of an output instruction torque, a vehicle speed, road surface µ (coefficient of friction of road surface on which vehicle travels), and other factors.

As a result, when the pair of left and right driving wheels are driven independently of each other, whether drive force failure has occurred in one of the drive systems can be evaluated, whereby unintended behavior of the vehicle can be avoided.

### Brief Description Of The Drawings

[FIG 1] is an overall system diagram showing an in-wheel motor vehicle (example of vehicle) that uses a drive control apparatus according to a first embodiment;
[FIG. 2] is a flowchart showing a procedure of a drive force failure evaluation process carried out in the in-wheel motor vehicle using the drive control apparatus according to the first embodiment; and
[FIG. 3] is a time chart showing a variety of characteristics of the in-wheel motor vehicle using the drive control apparatus according to the first embodiment in a case where drive force failure has occurred in one drive system, the characteristics including a driving wheel rotation speed N1, a drive source rotation speed N2, a normally operating driving wheel rotation speed, the value of a current supplied to the side where drive force failure has occurred, and the value of a current supplied to a normally operating side.

### Preferred Embodiments of the Invention

An aspect for implementing a drive control apparatus for a vehicle according to the invention will be described below with reference to a first embodiment indicated in the drawings.

### Embodiment 1

The configuration of the apparatus will first be described.

The configuration of a drive control apparatus for an in-wheel motor vehicle (example of vehicle) according to the first embodiment is divided into an "overall system configuration" and a "drive force control configuration," which will be separately described.

### [Overall system configuration]

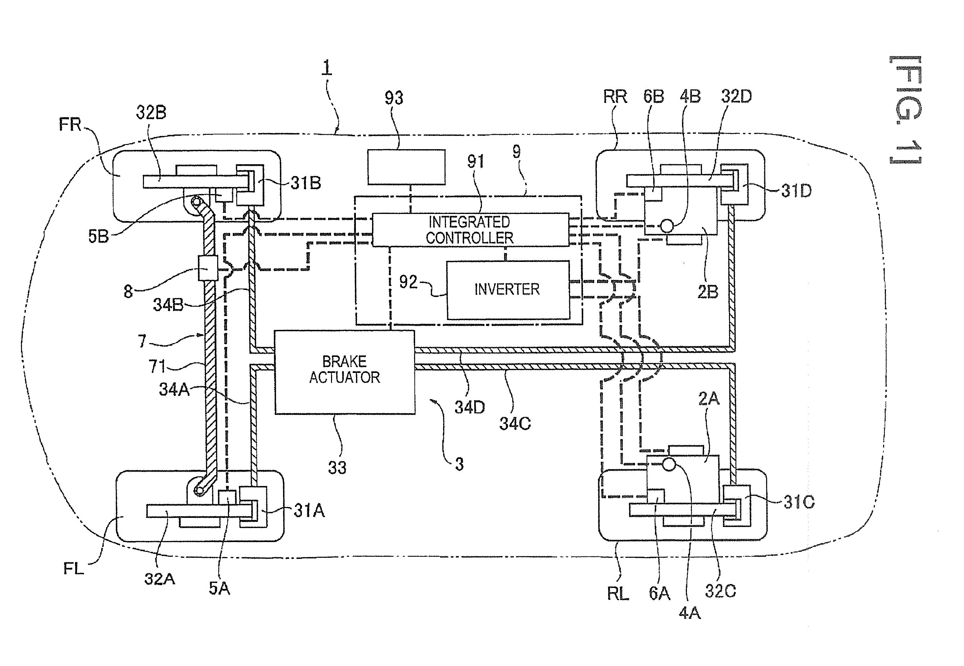

FIG. 1 is an overall system diagram showing an in-wheel motor vehicle (example of vehicle) that uses the drive control apparatus according to the first embodiment. An overall system configuration of the in-wheel motor vehicle will be described below with reference to FIG. 1.

An in-wheel motor vehicle 1 includes left and right front wheels (driven wheels) FL, FR, left and right rear wheels (left and right driving wheels) RL, RR, a left motor/generator (left drive means) 2A built in the left rear wheel RL, a right motor/generator (right drive means) 2B built in the right rear wheel RR, a hydraulic brake unit (hydraulic brake means) 3, a left motor rotation sensor (first left rotation speed detection means) 4A, a right motor rotation sensor (first right rotation speed detection means) 4B, left and right front wheel rotation sensors (driven wheel rotation speed detection means, vehicle speed detection means) 5A, 5B, a left rear wheel rotation sensor (second left rotation speed detection means) 6A, a right rear wheel rotation sensor (second right rotation speed detection means) 6B, a steering mechanism (steering) 7, a steering angle sensor (steering angle detection means) 8, and a control unit 9, as shown in FIG. 1.

Each of the left motor/generator 2A and the right motor/generator 2B described above can be a three-phase synchronous electric motor or a three-phase induction electric motor and is an AC electric motor capable of power operation at the time of acceleration and regenerative operation at the time of deceleration. At the time of power operation, the left and right rear wheels RL, RR are driven independently of each other based on a current from a battery (nickel-metal hydride battery or lithium ion battery, not shown). At the time of regenerative operation, the left and right rear wheels RL, RR are rotated independently of each other in a direction opposite to the direction at the time of driving to charge the battery. At this point, regenerative braking is applied to each of the left and right rear wheels RL, RR. The phrase "driven independently of each other" or "rotated in opposite direction independently of each other" means that currents different from each other can be supplied to the left motor/generator 2A and the right motor/generator 2B so that the output torques from the left motor/generator 2A and the right motor/generator 2B differ from each other. As a result, the wheels RL and RR can produce drive forces (regenerative forces) different from each other transmitted to a road surface.

The hydraulic brake unit 3 described above has brake calipers 31A to 31 D disposed in the wheels FL, FR, RL, and RR respectively, brake disks 32A to 32D fixed to hubs of the wheels FL, FR, RL, and RR respectively, a brake actuator 33, and brake fluid tubes 34A to 34D, which connect the brake calipers 31A to 31 D to the brake actuator 33. The brake actuator 33 includes a pump that increases pressure of the brake fluid (brake hydraulic pressure), a plurality of valves that change one of the brake fluid tubes 34A to 34D to another through which brake hydraulic pressure is transmitted and transmits the increased brake hydraulic pressure to a desired wheel, and a master cylinder.

The hydraulic brake unit 3 performs normal brake control and controlled brake control to brake the wheels FL, FR, RL, and RR on a wheel basis. The term "normal brake control" means that brake fluid pressure produced when a driver steps on a brake pedal (not shown) is transmitted to the brake calipers 31 A to 31D for individual braking of the wheels FL, FR, RL, and RR. On the other hand, the term "controlled brake control" means that a hydraulic brake activation instruction outputted from the control unit 9 causes the brake actuator 33 to transmit brake hydraulic pressure set by the brake actuator 33 to the brake calipers 31 A to 31D for individual braking of the wheels FL, FR, RL, and RR.

The left motor rotation sensor 4A described above is disposed in a left drive system ranging from the left motor/generator 2A to the left rear wheel RL and detects a rotation speed on the side where the left motor/generator 2A operates. In the present embodiment, the left motor rotation sensor 4A is formed of a resolver that detects the rotation speed of a rotor of the left motor/generator 2A (rotor rotation speed detector). The phrase "a rotation speed on the side where the left motor/generator 2A operates" is a rotation speed detected along a path from a point where rotation is outputted from the left motor/generator 2A to a point where the rotation is inputted to the left rear wheel RL.

The right motor rotation sensor 4B described above is disposed in the left drive system ranging from the right motor/generator 2B to the right rear wheel RR and detects a rotation speed on the side where the right motor/generator 2B operates. In the present embodiment, the right motor rotation sensor 4B is formed of a resolver that detects the rotation speed of a rotor of the right motor/generator 2B (rotor rotation speed detector). The phrase "a rotation speed on the side where the right motor/generator 2B operates" is a rotation speed detected along a path from a point where rotation is outputted from the right motor/generator 2B to a point where the rotation is inputted to the right rear wheel RR.

The left and right front wheel rotation sensors 5A, 5B described above are disposed in the left and right front wheels FL, FR and detect the individual rotation speeds of the wheels FL and FR, respectively. Each of the left and right front wheel rotation sensors 5A, 5B may be what is called an ABS sensor. Since a vehicle speed is calculated based on rotation speed signals from the left and right front wheel rotation sensors 5A, 5B, the left and right front wheel rotation sensors 5A, 5B correspond to the vehicle speed detection means.

The left rear wheel rotation sensor 6A described above is disposed in the left drive system ranging from the left motor/generator 2A to the left rear wheel RL and detects a rotation speed on the side where the left rear wheel RL rotates. In the present embodiment, the left rear wheel rotation sensor 6A is disposed in the left rear wheel RL and formed of an ABS sensor (wheel rotation speed detector) that detects the rotation speed of the left rear wheel. The phrase "a rotation speed on the side where the left rear wheel RL rotates" is a rotation speed detected along a path from a point where rotation is inputted to the left rear wheel RL to a point where the rotation is outputted to a road surface.

The right rear wheel rotation sensor 6B described above is disposed in a right drive system ranging from the right motor/generator 2B to the right rear wheel RR and detects a rotation speed on the side where the right rear wheel RR rotates. In the present embodiment, the right rear wheel rotation sensor 6B is disposed in the right rear wheel RR and formed of an ABS sensor (wheel rotation speed detector) that detects the rotation speed of the right rear wheel. The phrase "a rotation speed on the side where the right rear wheel RR rotates" is a rotation speed detected along a path from a point where rotation is inputted to the right rear wheel RR to a point where the rotation is outputted to a road surface. The right rear wheel rotation sensor 6B may be what is called an ABS sensor.

The steering mechanism 7 described above has a steering wheel (not shown) and a steering control mechanism 71, which steers the left and right front wheels FL, FR in accordance with operation of the steering wheel.

The steering angle sensor 8 described above is disposed in the steering control mechanism 71 and detects a steering angle of the left and right front wheels FL, FR, that is, a steering angle in the steering mechanism 7 (cutting angle).

The control unit 9 described above has an integrated controller 91, an inverter 92, and an alarm display (alarm means) 93.

The integrated controller 91 described above receives the rotation speed of the rotor of the left motor/generator 2A as an input from the left motor rotation sensor 4A. The integrated controller 91 also receives the rotation speed of the rotor of the right motor/generator 2B as another input from the right motor rotation sensor 4B. The integrated controller 91 also receives the rotation speeds of the left and right front wheels FL, FR as another input from the left and right front wheel rotation sensors 5A, 5B. The integrated controller 91 also receives the rotation speed of the left rear wheel RL as another input from the left rear wheel rotation sensor 6A. The integrated controller 91 also receives the rotation speed of the right rear wheel RR as another input from the right rear wheel rotation sensor 6B. The integrated controller 91 also receives the steering angle of the left and right front wheels FL, FR as another input from the steering angle sensor 8.

The integrated controller 91 then outputs a hydraulic brake activation instruction to the brake actuator 33 in the hydraulic brake unit 3 in accordance with the inputs from the sensors described above, outputs a current supply instruction to the inverter 92, and outputs an alarm instruction to the alarm display 93.

The inverter 92 described above converts a DC current from the battery (not shown) into a three-phase AC current in response to the current supply instruction from the integrated controller 91 and separately supplies the left motor/generator 2A and the right motor/generator 2B with electric power. When the left motor/generator 2A or the right motor/generator 2B is performing regeneration operation, the inverter 92 converts a three-phase AC current from the motor/generator 2A or 2B into a DC current, which charges the battery.

The alarm display 93 described above is, for example, one of meters provided in an instrumental panel and displays an alarm that prompts the driver to lower a requested drive force (an alarm that prompts the driver to lower a gas pedal step-on force) and/or an alarm that notifies the driver of abnormalities of the variety of sensors, such as the left motor rotation sensor 4A, in accordance with the alarm instruction from the integrated controller 91.

### [Drive force control configuration]

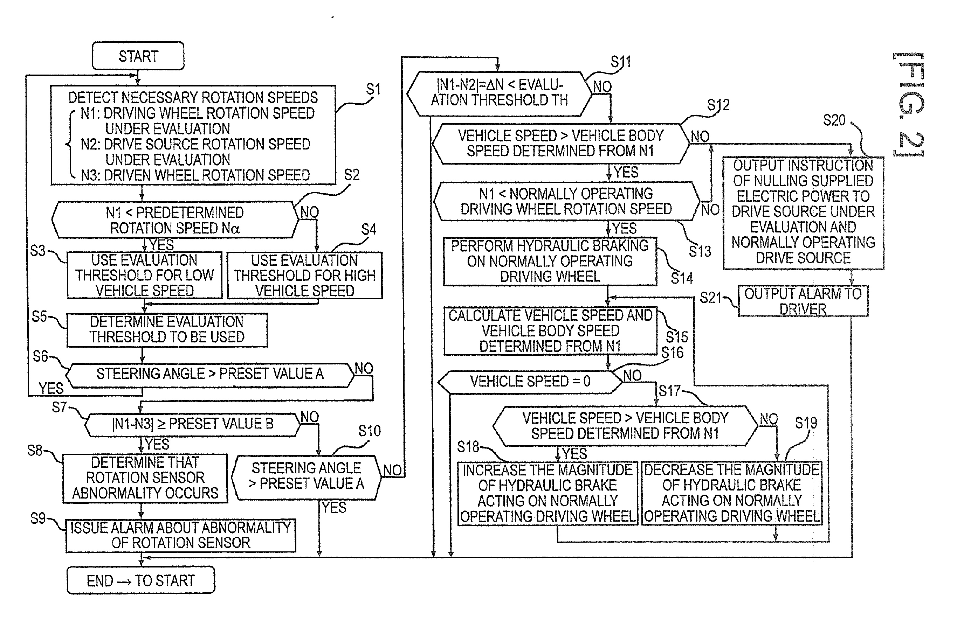

FIG. 2 is a flowchart showing a procedure of a drive force failure evaluation process carried out in the in-wheel motor vehicle using the drive control apparatus according to the first embodiment (drive force failure evaluation means). Each step in FIG. 2, which represents the drive force control configuration, will be described below. The drive force failure evaluation process is carried out alternately for the left drive system and the right drive system. The following description will be made of a case where the left drive system is a side to be evaluated whether drive force failure has occurred.

In step S1, a variety of rotation speeds required in the in-wheel motor vehicle 1 are detected, and the control proceeds to step S2.

The rotation speeds to be detected include the rotation speed of the left rear wheel RL, which is the driving wheel under evaluation, (second left rotation speed, hereinafter referred to as driving wheel rotation speed N1), the rotation speed of the rotor of the left motor/generator 2A, which is the drive means under evaluation (first left rotation speed, hereinafter referred to as drive source rotation speed N2), and an average rotation speed of the left and right front wheels FL, FR (hereinafter referred to as driven wheel rotation speed N3). The driving wheel rotation speed N1 described above is detected by the left rear wheel rotation sensor 6A. The drive source rotation speed N2 described above is detected by the left motor rotation sensor 4A. The driven wheel rotation speed N3 described above is detected by the left and right front wheel rotation sensors 5A, 5B.

In step S2, the detection of the rotation speeds in step S1 is followed by evaluation of whether or not the driving wheel rotation speed N1 is lower than a predetermined rotation speed Nα set in advance. When the evaluation result is YES (N1<Nα), the control proceeds to step S3. When the evaluation result is NO (N1≥Nα), the control proceeds to step S4.
The term "predetermined rotation speed Nα" is a rotation speed used as a reference when a drive force failure evaluation threshold TH is set. The predetermined rotation speed Nα is set at an arbitrary rotation speed that sets a boundary between a case where drive force failure evaluation precision is taken into account and a case where drive force failure evaluation period is taken into account.

That is, when the driving wheel rotation speed N1 is lower than the predetermined rotation speed Nα, a vehicle speed condition is determined to be a relatively low vehicle speed condition in which it is necessary to add a sufficiently large safety factor to a change in a detected value from each of the rotation sensors due to noise and other types of external influence. On the other hand, when the driving wheel rotation speed N1 is higher than or equal to the predetermined rotation speed Nα, the vehicle speed condition is determined to be a relatively high vehicle speed condition in which it is unnecessary to consider external factors that infrequently occur and the range of variation that is unlikely to occur.

In step S3, the evaluation result of N1<Nα, that is, the evaluation result of the relatively low vehicle speed condition in step S2 is followed by use of an evaluation threshold for a low vehicle speed (first threshold) TH1 as the drive force failure evaluation threshold TH. The control then proceeds to step S5.

The "evaluation threshold for a low vehicle speed TH1" is a relatively large evaluation threshold. That is, the evaluation threshold for a low vehicle speed prevents incorrect evaluation of drive force failure and hence improves the evaluation precision in the low vehicle speed condition, in which town traveling frequently occurs and a long period elapses until drive force failure affects the behavior of the vehicle, that is, a long period is allowed to stabilize the behavior of the vehicle.

In step S4, the evaluation result of N1≥Nα, that is, the evaluation result of the relatively high vehicle speed condition in step S2 is followed by use of an evaluation threshold for a high vehicle speed TH2 as the drive force failure evaluation threshold TH. The control then proceeds to step S5.

The "evaluation threshold for a high vehicle speed TH2" is smaller than the evaluation threshold for a low vehicle speed TH 1. That is, the evaluation threshold for a high vehicle speed can shorten a period from a point of time when drive force failure occurs to a point of time when a difference in drive force is reduced in the high vehicle speed condition, in which town traveling infrequently occurs and only a short period elapses until drive force failure affects the behavior of the vehicle, that is, only a short period is allowed to stabilize the behavior of the vehicle. The evaluation threshold for a high vehicle speed TH2 can thus shorten the evaluation period.

In step S5, the use of the evaluation threshold for a low vehicle speed TH1 in step S3 or the use of the evaluation threshold for a high vehicle speed TH2 in step S4 is followed by determination of a threshold used to evaluate whether drive force failure has occurred (drive force failure evaluation threshold TH). The control then proceeds to step S6.

In step S6, the determination of the drive force failure evaluation threshold TH in step S5 is followed by detection of a steering angle θ in the steering mechanism 7 from the steering angle sensor 8 and evaluation of whether or not the steering angle θ exceeds a preset value A. When the evaluation result is YES (θ > preset value A), the control returns to step S1. When the evaluation result is NO (θ ≤ preset value A), the control proceeds to step S7.

The preset value A is a maximum of angles that prevent a difference in rotation speed between the left rear wheel RL and the right rear wheel RR from occurring when the left and right front wheels FL, FR are steered (neutral position in the present embodiment). That is, it is believed that when the steering mechanism 7 is operated to cause the steering wheel to pivot with respect to the neutral position and the steering angle θ exceeds the preset value A, steering operation undesirably produces a difference in rotation speed between the left rear wheel RL and the right rear wheel RR.

In step S7, the evaluation result of θ ≤ preset value A in step S6 is followed by evaluation of whether or not an absolute value of a difference in rotation speed between the driving wheel rotation speed N1 and the driven wheel rotation speed N3 is greater than or equal to a preset value B. When the evaluation result is YES (|N1-N3| ≥ preset value B), the control proceeds to step S8. When the evaluation result is NO (|N1-N3| < preset value B), the control proceeds to step S10.

The preset value B is a maximum rotation speed difference used to evaluate whether any of the left rear wheel rotation sensor 6A, the right rear wheel rotation sensor 6B, and the left and right front wheel rotation sensors 5A, 5B is defective.

In step S8, the evaluation of |N1-N3| ≥ preset value B in step S7 is followed by evaluation of abnormality of any of the following rotation sensors: the left rear wheel rotation sensor 6A; the right rear wheel rotation sensor 6B; and the left and right front wheel rotation sensors 5A, 5B. The control then proceeds to step S9.

That is, since the absolute value of a difference in rotation speed between the driving wheel rotation speed N1 and the driven wheel rotation speed N3 is greater than or equal to the preset value B, the detected difference in rotation speed between the driving wheel and the driven wheel is a large value. In a vehicle, the driving wheel and the driven wheel typically rotate at substantially the same rotation speed. In contrast, when the difference in rotation speed between the driving wheel and the driven wheel is a large value, it can be determined that any of the sensors works abnormally.

In step S9, the evaluation of abnormality of any of the rotation sensors in step S8 is followed by display of an alarm that notifies abnormality of any of the variety of sensors on the alarm display 93. The control then proceeds to END, and the control procedure is terminated.

In step S10, the evaluation of |N1-N3| < preset value B in step S7 or the evaluation of a small difference in rotation speed between the driving wheel and the driven wheel, which means that no sensor abnormality has occurred, is followed by detection of the steering angle θ in the steering mechanism 7 again with the steering angle sensor 8 and evaluation of whether or not the detected steering angle θ is greater than the preset value A. When the evaluation result is YES (θ > preset value A), the control proceeds to END and the control procedure is terminated. When the evaluation result is NO (θ ≤ preset value A), the control proceeds to step S 11.

The preset value A used in step S10 is assumed to be the same preset value A used in step S6.

In step S11, the evaluation of θ ≤ preset value A in step S10 is followed by evaluation of whether or not an absolute value of a difference in rotation speed between the driving wheel rotation speed N1 and the drive source rotation speed N2 (hereinafter referred to as drive system differential rotation ΔN) is smaller than the drive force failure determination threshold TH, which is set in advance. When the evaluation result is YES (|N1-N2|=ΔN<TH), the control proceeds to END and the control procedure is terminated. When the evaluation result is YES (|N1-N2|=ΔN≥TH), the control proceeds to step S12.

The "drive force failure evaluation threshold TH" is the difference in rotation speed used to evaluate that drive force failure has occurred in a drive system under evaluation. The evaluation threshold TH is determined in step S5. When the drive system differential rotation ΔN is smaller than the evaluation threshold TH, it is evaluated that there is no difference between the rotation speed on the side where the left motor/generator 2A operates and the rotation speed on the side where the left rear wheel RL rotates, and that no drive force failure has occurred. On the other hand, when the drive system differential rotation ΔN is greater than or equal to the evaluation threshold TH, it is evaluated that there is a sufficient difference between the rotation speed on the side where the left motor/generator 2A operates and the rotation speed on the side where the left rear wheel RL rotates, and that drive force failure has occurred in the left drive system.

When a reduction gear unit and/or a transmission is present between the left motor/generator 2A and the left rear wheel RL, the drive system differential rotation ΔN is calculated in consideration of a reduction gear ratio and/or a transmission gear ratio. That is, when a reduction gear unit or any other similar apparatus is present, the drive system differential rotation ΔN is set at an absolute value of a difference between the driving wheel rotation speed N1 multiplied by the reduction gear ratio (transmission gear ratio) and the drive source rotation speed N2.

The following list shows specific examples of a case where the drive system differential rotation ΔN is greater than or equal to the evaluation threshold TH and it can therefore be evaluated that drive force failure has occurred:
- A case where failure in a drive system disables power transmission between the motor/generator and the driving wheel and no load is therefore coupled to the motor/generator, resulting in an abrupt increase in the rotation speed of the motor/generator;
- A case where failure in a drive system mechanically locks the rotation of the motor/generator, forcing the rotation speed of the motor/generator to be zero; and
- A case where drive force failure during coast traveling without the gas pedal stepped on forces the rotation speed of the motor/generator to be zero.

In step S12, the evaluation of ΔN≥TH in step S11 is followed by calculation of a vehicle speed based on left and right front wheel rotation speed signals from the left and right front wheel rotation sensors 5A, 5B and calculation of a vehicle body speed determined from the driving wheel rotation speed N1 based on a left rear wheel rotation speed signal from the left rear wheel rotation sensor 6A (hereinafter referred to as N1 vehicle body speed). It is then evaluated whether or not the N1 vehicle body speed is lower than the vehicle speed. When the evaluation result is YES (vehicle speed > N1 vehicle body speed), the control proceeds to step S13. When the evaluation result is NO (vehicle speed ≤ N1 vehicle body speed), the control proceeds to step S20.

In step S 13, the evaluation of vehicle speed > N1 vehicle body speed in step S12 is followed by detection of the rotation speed of the right rear wheel RR, which is a driving wheel that operates normally, (hereinafter referred to as normally operating driving wheel rotation speed) with the right rear wheel rotation sensor 6B. It is then evaluated whether or not the driving wheel rotation speed N1 is lower than the normally operating driving wheel rotation speed. When the evaluation result is YES (N1 < normally operating driving wheel rotation speed), the control proceeds to step S14. When the evaluation result is NO (N1 ≥ normally operating driving wheel rotation speed), the control proceeds to step S20.

The case where the driving wheel rotation speed N1 is lower than the normally operating driving wheel rotation speed is a case where the rotation speed of the left rear wheel RL, which is a driving wheel under evaluation, is lower than the rotation speed of the right rear wheel RR, which is a driving wheel that operates normally and has not undergone the drive force failure evaluation, and hence drive force failure along with an increase in friction on the driving wheel side has occurred in the drive system under evaluation (left drive system).

In step S 14, the evaluation of N1 < normally operating driving wheel rotation speed in step S 13 is followed by output of the hydraulic brake activation instruction from the control unit 9, which causes the hydraulic brake unit 3 to brake the right rear wheel RR, which is a normally operating driving wheel. The control then proceeds to step S 15.

In this process, the braking force to be applied is set in advance in accordance with the vehicle speed and other factors.

In step S 15, the activation of the hydraulic brake in step S 14 is followed by recalculation of the vehicle speed based on the left and right front wheel rotation speed signals from the left and right front wheel rotation sensors 5A, 5B and calculation of the N1 vehicle body speed based on the left rear wheel rotation speed signal from the left rear wheel rotation sensor 6A. The control then proceeds to step S16.

In step S16, the calculation of the vehicle speed and the N1 vehicle body speed in step S 15 is followed by evaluation of whether or not the vehicle speed is zero. When the evaluation result is YES (vehicle speed is zero), the control proceeds to END and the control procedure is terminated. When the evaluation result is NO (vehicle speed is greater than zero), the control proceeds to step S 17.

The sentence "vehicle speed is zero" indicates a state in which the vehicle is not traveling, that is, the left and right front wheels FL, FR, which are driven wheels, are not rotated.

In step S 17, evaluation of the vehicle speed being greater than zero in step S16 is followed by assumption of the vehicle being traveling and evaluation of whether or not the N1 vehicle body speed calculated in step S16 is lower than the vehicle speed calculated in the same step S 15. When the evaluation result is YES (vehicle speed > N1 vehicle body speed), the control proceeds to step S18. When the evaluation result is NO (vehicle speed ≤ N1 vehicle body speed), the control proceeds to step S 19.

In step S18, evaluation of vehicle speed > N1 vehicle body speed in step S 17 is followed by assumption of the vehicle speed being greater than the operation speed of the driving wheel under evaluation (left rear wheel RL) and increase in the braking force produced by the hydraulic brake unit 3 and acting on the right rear wheel RR, which is normally operating driving wheel. The control then returns to step S 15.

The phrase "increase in the braking force" means that the braking force acting on the right rear wheel RR is made greater than the braking force applied thereto in step S14.

In step S19, the evaluation of vehicle speed ≤ N1 vehicle body speed in step S 17 is followed by assumption of the vehicle speed being lower than the rotation speed of the driving wheel under evaluation (left rear wheel RL) and decrease in the braking force produced by the hydraulic brake unit 3 and acting on the right rear wheel RR, which is normally operating driving wheel. The control then returns to step S 15.

The phrase "decrease in the braking force" means that the braking force acting on the right rear wheel RR is made smaller than the braking force applied thereto in step S 14.

In step S20, the evaluation of vehicle speed ≤ N1 vehicle body speed in step S12 or evaluation of N1 ≥ normally operating driving wheel rotation speed in step S 13 is followed by output of an electric power supply instruction of nulling the electric power supplied to the left motor/generator 2A, which is a drive source under evaluation, and the right motor/generator 2B, which is normally operation drive source. The control then proceeds to step S21.

The phrase "electric power supply instruction of nulling supplied electric power" is an instruction of setting an output torque instruction value applied to the left and right motor/generators 2A, 2B at a predetermined threshold (nearly zero) or lower to stop the operation of the motor/generators 2A and 2B. As a result, the output torque from each of the motor/generators 2A and 2B is reduced to nearly zero.

In step S21, the output of the instruction of nulling supplied electric power in step S20 is followed by display of an alarm that prompts the driver to reduce a requested drive force on the alarm display 93. The control then proceeds to END, where the control procedure is terminated.

An effect of the apparatus will next be described.

An effect of the drive control apparatus for a vehicle according to the first embodiment is divided into a "drive force balance effect based on decrease in supplied current," a "drive force balance effect based on activation of hydraulic brake," and an "effect provided when no drive force failure evaluation is made," which will be separately described.

### [Drive force balance effect based on decrease in supplied current]

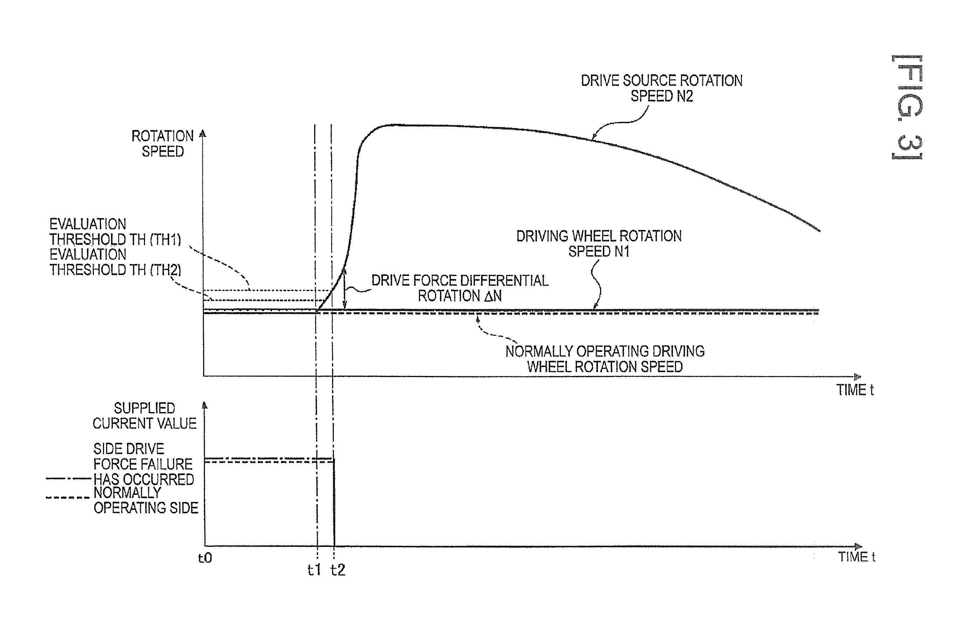

FIG. 3 is a time chart showing a variety of characteristics of the in-wheel motor vehicle using the drive control apparatus according to the first embodiment in a case where drive force failure has occurred in one of the drive systems, and the characteristics include the driving wheel rotation speed N1, the drive source rotation speed N2, the normally operating driving wheel rotation speed, the value of a current supplied to the side where drive force failure has occurred, and the value of a current supplied to the normally operating side.

Consider a case where the in-wheel motor vehicle 1 according to the first embodiment travels by using the left and right motor/generators 2A, 2B to drive the left and right rear wheels RL, RR independently of each other. Conditions under which the vehicle travels follow:
- The steering angle θ in the steering mechanism 7 is smaller than or equal to the preset value A, which means that the steering angle θ does not affect the difference in rotation speed between the left rear wheel RL and the right rear wheel RR.
- The absolute value of a difference between the driving wheel rotation speed N1 and the driven wheel rotation speed N3 is smaller than or equal to the present value B, which means that none of the left rear wheel rotation sensor 6A, the right rear wheel rotation sensor 6B, and the left and right front wheel rotation sensors 5A, 5B is defective.
- The driving wheel rotation speed N1 is smaller than the predetermined rotation speed Nα, and the evaluation threshold for a low vehicle speed TH1 is therefore used as the drive force failure evaluation threshold TH.

When it is assumed that the value of the current supplied to the left motor/generator 2A and the value of the current supplied to the right motor/generator 2B are equal to each other and it is evaluated whether drive force failure has occurred in the left drive system, the control proceeds in the flowchart shown in FIG. 2 as follows: step S1 → step S2 → step S3 → step S5 → step S6 → step S7 → step S10 → step S11.

In a period from time t0 to time t1 shown in FIG. 3, the driving wheel rotation speed N1 and the drive source rotation speed N2 are equal to each other, which means that the drive system differential rotation ΔN is nearly zero and hence smaller than the drive force failure evaluation threshold TH, which is set in advance. The evaluation result in step S11 is therefore YES, and no drive force failure evaluation is made.

At the time t1, for example, when failure in the left drive system disables the power transmission between the left motor/generator 2A and the left rear wheel RL and hence no load is coupled to the left motor/generator 2A, the rotation speed of the left motor/generator 2A (drive source rotation speed N2) abruptly increases.

At time t2, when the drive system differential rotation ΔN exceeds the drive force failure evaluation threshold TH, the evaluation result in step S11 is NO (ΔN ≥ evaluation threshold TH), and it is therefore evaluated that drive force failure has occurred in the left drive system.

The control then proceeds to step S12, and it is evaluated whether or not the vehicle body speed determined from the driving wheel rotation speed N1 (N1 vehicle body speed) is lower than the vehicle speed. It is noted that the driving wheel rotation speed N1 at the time t2 remains unchanged and is the same as that before the drive force failure evaluation is made (before time t2). That is, the N1 vehicle body speed is substantially equal to the vehicle speed. The evaluation result in step S12 is therefore NO (vehicle speed ≤ N1 vehicle body speed), and the control proceeds to step S20.

As a result, the value of the current supplied to each of the left motor/generator 2A and the right motor/generator 2B (supplied current value) is reduced to zero, and the output torque from each of the left motor/generator 2A and the right motor/generator 2B is therefore reduced to zero.

As described above, in the drive control apparatus for a vehicle according to the first embodiment, it is evaluated whether drive force failure has occurred based on the difference in rotation speed between the driving wheel rotation speed N1 and the drive source rotation speed N2 (drive system differential rotation AN). Whether drive force failure has occurred can therefore be evaluated irrespective of the value of the current supplied to the left motor/generator 2A (torque instruction value), which is a drive source, and conditions of a road surface, such as a low friction road surface.

It is therefore unnecessary to include a margin for preventing incorrect evaluation in the evaluation threshold TH, and a period from a point of time when drive force failure occurs to a point of time when the evaluation is made can be shortened accordingly. That is, directly monitoring the rotation speed on the drive source side (drive source rotation speed N2) and the rotation speed on the driving wheel side (driving wheel rotation speed N1) allows correct evaluation of drive force failure even when the drive system differential rotation ΔN is a small value.

When the evaluation of drive force failure can thus be made in a short period, measures can be taken immediately after the drive force failure actually occurs, whereby the stability of the behavior of the vehicle can be improved.

That is, in the drive control apparatus for a vehicle according to the first embodiment, after it is evaluated that drive force failure has occurred in the left drive system, the value of the current supplied to the right motor/generator 2B (supplied current value) is reduced to zero. As a result, even when drive force failure occurs in one of the drive systems (left drive system in first embodiment) and hence the drive force transmitted from the left rear wheel RL to a road surface greatly decreases, measures are so taken in the other drive system (right drive system in first embodiment) that the output torque from the right motor/generator 2B is reduced to zero, whereby the drive force transmitted from the left rear wheel RR to the road surface can be reduced.

As a result, the difference in drive force between the left and right sides can be reduced, and hence an increase in yaw moment acting on the vehicle can be suppressed, whereby an unintended behavior of the vehicle, such as drift of the vehicle toward the side where the drive force failure has occurred, can be avoided. Stable traveling can thus be ensured.

In the first embodiment, when it is evaluated that drive force failure has occurred in the left drive system, the value of the current supplied to not only the right motor/generator 2B but also the left motor/generator 2A (supplied current value) is reduced to zero.

As a result, for example, even when it is incorrectly evaluated due, for example, to sensor failure that drive force failure has occurred, but no drive force failure has actually occurred, the drive force transmitted from the wheels to a road surface is reduced both in the left and right drive systems, whereby no difference in drive force between the left and right sides is produced.

Further, in the first embodiment, the driving wheel rotation speed N1 is detected by the left rear wheel rotation sensor 6A disposed in the left rear wheel RL. On the other hand, the drive source rotation speed N2 is detected by the left motor rotation sensor 4A, which is a resolver that detects the rotor rotation speed. That is, the left motor rotation sensor 4A and the left rear wheel rotation sensor 6A are disposed at locations close to both ends of the left drive system ranging from the left motor/generator 2A to the left rear wheel RL.

As a result, the drive force failure evaluation can be made in correspondence with a defective portion present over a wider range of power transmission path than, for example, in a case where the rotation speeds of a motor output shaft and an axle shaft input shaft are separately monitored.

Further, detecting necessary rotation speeds by using an existing resolver and ABS sensor eliminates necessities to add new sensors. As a result, drive force failure evaluation can be made with a small increase in cost or no increase in cost.

In the drive control apparatus for a vehicle according to the first embodiment, in the flowchart shown in FIG. 2, after the control proceeds to step S20, where the value of the current supplied to each of the left motor/generator 2A and the right motor/generator 2B (supplied current value) is reduced to zero, the control proceeds to step S21, where the alarm display 93 displays an alarm that prompts the driver to reduce a requested drive power.

As a result, when the value of the current supplied to each of the left and right motor/generators 2A, 2B is reduced to zero after it is evaluated that drive force failure has occurred, the driver is allowed to recognize that drive force failure has occurred and notified that operation using power higher than necessary should be avoided. That is, unnecessary high-power operation can be advantageously restricted.

Further, in the first embodiment described above, the following conditions are assumed: "The driving wheel rotation speed N1 is smaller than the predetermined rotation speed Nα, and the evaluation threshold for a low vehicle speed TH1 is used as the drive force failure evaluation threshold TH." When the evaluation threshold for a low vehicle speed TH1 is used as the drive force failure evaluation threshold TH, the evaluation threshold is set at a relatively large value. Therefore, in the low vehicle speed condition in which the driving wheel rotation speed N1 is lower than the predetermined rotation speed Nα, it is evaluated that drive force failure has occurred after the drive system differential rotation ΔN reaches a sufficiently large value. As a result, any drive system differential rotation ΔN produced, for example, by noise causes no drive force failure evaluation to be made, whereby incorrect evaluation of drive force failure will not be made and hence evaluation precision can be improved.

On the other hand, when the driving wheel rotation speed N1 is greater than or equal to the predetermined rotation speed Nα and the evaluation threshold for a high vehicle speed TH2 is used as the drive force failure evaluation threshold TH, the evaluation threshold is set at a value smaller than the evaluation threshold for a low vehicle speed TH1. As a result, in the high vehicle speed condition in which the driving wheel rotation speed N1 is equal to the predetermined rotation speed Nα, it is evaluated that drive force failure has occurred even when a slight amount of drive system differential rotation ΔN is produced. That is, in the high vehicle speed condition in which drive force failure quickly affects the behavior of the vehicle, drive force failure evaluation can be quickly made, whereby the evaluation period can be shortened. As a result, after drive force failure occurs, drive force control can be immediately performed, whereby unintended behavior of the vehicle can be avoided.

In step S 11 in the flowchart shown in FIG. 2, it is evaluated whether or not the absolute value of the difference in rotation speed between the driving wheel rotation speed N1 and the drive source rotation speed N2 (drive system differential rotation ΔN) is smaller than a drive force failure evaluation threshold TH set in advance. When ΔN ≥ the evaluation threshold TH, it is evaluated that drive force failure has occurred. That is, even when the drive source rotation speed N2 is lower than the driving wheel rotation speed N1, but when the difference in rotation therebetween (drive system differential rotation ΔN) is greater than or equal to the evaluation threshold TH, it is evaluated that drive force failure has occurred.

As a result, even when drive force failure occurs along with an increase in friction on the drive source side, for example, when a shaft in the motor/generator is broken and a piece of the broken shaft is so immediately placed time that it increases the friction of the motor shaft, the evaluation can be appropriately made.

That is, in general, when drive force failure occurs in a drive system, a load on the drive source decreases and the rotation speed on the drive source side increases accordingly. An increase in friction on the drive source side may cause the rotation speed on the drive source side to be smaller than the rotation speed on the wheel side. Even in this case, appropriate drive force failure evaluation can be made by making the evaluation based on the absolute value of a difference in rotation speed between the driving wheel rotation speed N1 and the drive source rotation speed N2 (drive system differential rotation ΔN), whereby the left and right drive forces can be balanced with each other by performing drive force control and hence stability of the vehicle can be ensured.

### [Drive force balance effect based on activation of hydraulic brake]

As described above, in the case shown in FIG. 3, before and after the evaluation of drive force failure, the rotation speed of the left rear wheel RL (driving wheel rotation speed N1), which is the rotation speed of the wheel on the side where the drive force failure has occurred, does not lower, and hence the vehicle body speed (N1 vehicle body speed) determined from the driving wheel rotation speed N1 is substantially equal to the vehicle speed.

In contrast, when friction on the driving wheel side increases along with the drive force failure so that the driving wheel rotation speed N1 decreases and the N1 vehicle body speed becomes smaller than the vehicle speed, the evaluation result in step S12 in the flowchart shown in FIG. 2 is YES. The control then proceeds to step S13, where it is evaluated whether or not the driving wheel rotation speed N1 is lower than the normally operating driving wheel rotation speed (rotation speed of right rear wheel RR in the present embodiment).

Further, when the driving wheel rotation speed N1 is lower than the normally operating driving wheel rotation speed, the control proceeds to step S 14, where a predetermined braking force set in advance and produced by the hydraulic brake unit 3 is applied to the right rear wheel RR, which is the normally operating driving wheel. As a result, the right rear wheel RR is braked, and the drive force transmitted from the right rear wheel RR to a road surface is reduced accordingly.

That is, even when drive force failure occurs along with an increase in friction on the driving wheel side, which makes it difficult to control the drive force transmitted from the driving wheel on the side where the drive force failure has occurred to a road surface, friction balance between the left and right drive forces can be maintained, whereby stability of the vehicle can be achieved.

The drive force failure along with an increase in friction on the driving wheel side occurs, for example, when a shaft in the motor/generator is broken and a piece of the broken shaft is so immediately placed time that it increases the friction of the axle shaft.

After a braking force produced by the hydraulic brake unit 3 is applied to the right rear wheel RR, which is the normally operating driving wheel, the hydraulic brake unit 3 keeps applying the hydraulic braking force to the right rear wheel RR until the vehicle speed is reduced to zero and it is evaluated that the vehicle comes to a halt.

As shown in the flowchart in FIG. 2, when the predetermined braking force is applied and then the N1 vehicle body speed is reduced to a value below the vehicle speed (evaluation result in step S 17 is YES), the control proceeds to step S18, where the braking force applied to the right rear wheel RR is further increased. On the other hand, when the predetermined braking force is applied and then the N1 vehicle body speed exceeds the vehicle speed (evaluation result in step S 17 is NO), the control proceeds to step S 19, where the braking force applied to the right rear wheel RR is reduced.

As described above, setting the magnitude of the hydraulic braking force applied to the right rear wheel RR based on the N1 vehicle body speed and the vehicle speed allows more appropriate reduction in the difference in drive force between the left and right sides, whereby the stability of the vehicle can be improved.

### [Effect provided when no drive force failure evaluation is made]

### <When sensor abnormality occurs>

A description will next be made of a case where any of the rotation sensors incorporated in the in-wheel motor vehicle 1 (left rear wheel rotation sensor 6A, right rear wheel rotation sensor 6B, and left and right front wheel rotation sensors 5A, 5B) works abnormally.

In this case, the evaluation result in step S7 in the flowchart shown in FIG. 2 is YES, and the control proceeds to step S8 and then step S9, followed by termination of the drive force failure evaluation process.

In the procedure described above, when any of the rotation sensors (left rear wheel rotation sensor 6A, right rear wheel rotation sensor 6B, and left and right front wheel rotation sensors 5A, 5B) works abnormally, no drive force failure evaluation is made, whereby incorrect evaluation due to the sensor abnormality is avoided. Further, cross monitoring between the rotation sensors can always be performed, whereby the reliability of each of the rotation sensors can be improved. Unnecessary drive force control based on incorrect evaluation can also be avoided.

Further, in the drive control apparatus for a vehicle according to the first embodiment, in response to evaluation of presence of rotation sensor abnormality, the alarm display 93 displays an alarm that notifies the sensor abnormality. The driver can therefore recognize the sensor abnormality.

### <When steering angle is large>

A description will next be made of a case where the steering angle in the steering mechanism 7 of the in-wheel motor vehicle 1 is large.

In this case, the evaluation result in step S6 in the flowchart shown in FIG. 2 is YES and the control returns to step S 1, or the evaluation result in step S10 is YES and the drive force failure evaluation process is terminated.

As described above, when steering operation with a large steering angle affects a difference in rotation speed between the left rear wheel RL and the right rear wheel RR, no sensor abnormality evaluation or drive force failure evaluation is made.

That is, when steering operation produces a temporary difference in drive force between the left and right sides, the sensor abnormality evaluation in step S7 is not made or the drive force failure evaluation in step S11 is not made. As a result, incorrect evaluation due to steering operation can be avoided. Further, unnecessary drive force control based on incorrect evaluation can also be avoided.

Advantageous effects provided by the apparatus will next be described. The drive control apparatus for a vehicle according to the first embodiment can provide the following advantageous effects:
(1) The following components are provided:
   a left driving wheel (left rear wheel) RL and a right driving wheel (right rear wheel) RR disposed on left and right sides of a vehicle (in-wheel motor vehicle) 1;
   a left drive means (left motor/generator) 2A for driving the left driving wheel RL;
   a right drive means (right motor/generator) 2B for driving the right driving wheel RR;
   a first left rotation speed detection means (left motor rotation sensor) 4A for detecting a rotation speed on the side where the left drive means operates, the first left rotation speed detection means being provided in a left drive system ranging from the left drive means 2A to the left driving wheel RL;
   a second left rotation speed detection means (left rear wheel rotation sensor) 6A for detecting a rotation speed on the left driving wheel side, the second left rotation speed detection means being provided in the left drive system;
   a first right rotation speed detection means (right motor rotation sensor) 4B for detecting a rotation speed on the side where the right drive means operates, the first right rotation speed detection means which being provided in a right drive system ranging from the right drive means 2B to the right driving wheel RR;
   a second right rotation speed detection means (left rear wheel rotation sensor) 6B for detecting a rotation speed on the right driving wheel side, the second right rotation speed detection means being provided in the right drive system; and
   a drive force failure evaluation means (FIG. 2) for evaluating that drive force failure has occurred in the left drive system when (drive system differential rotation ΔN) produced between a first left rotation speed detected by the first left rotation speed detection means 4A (drive source rotation speed N2) and a second left rotation speed detected by the second left rotation speed detection means 6A (driving wheel rotation speed N1) is greater than or equal to a predetermined threshold TH, and
   evaluating that drive force failure has occurred in the right drive system when a difference in rotation speed (drive system differential rotation ΔN) produced between a first right rotation speed detected by the first right rotation speed detection means 4B (drive source rotation speed N2) and a second right rotation speed detected by the second right rotation speed detection means 6B (driving wheel rotation speed N1) is greater than or equal to the threshold TH.
      In the configuration described above, when the pair of left and right driving wheels RL, RR are driven independently of each other, whether drive force failure has occurred in one of the drive systems can be evaluated, whereby unintended behavior of the vehicle can be avoided.
(2) The drive force failure evaluation means (FIG. 2) sets a first threshold (evaluation threshold for a low vehicle speed TH1) as the threshold TH when the second left rotation speed or the second right rotation speed (driving wheel rotation speed N1) is smaller than a predetermined rotation speed Nα, and sets a second threshold (evaluation threshold for a high vehicle speed TH2) smaller than the first threshold (evaluation threshold for a low vehicle speed TH1) as the threshold TH when the second left rotation speed or the second right rotation speed (driving wheel rotation speed N1) is greater than or equal to the predetermined rotation speed Nα.
   Changing the drive force failure evaluation threshold TH in accordance with the driving wheel rotation speed N1 as described above can improve evaluation precision in accordance with a vehicle speed condition to prevent incorrect evaluation and can shorten an evaluation period to suppress occurrence of unintended behavior of the vehicle.
(3) The drive force failure evaluation means (FIG. 2) includes a drive force control means (step S12 to step S21) for performing a control for reducing a drive force transmitted from the right driving wheel RR to a road surface when the drive force failure evaluation means evaluates that drive force failure has occurred in the left drive system, and
   performing a control for reducing a drive force transmitted from the left driving wheel RL to the road surface when the drive force failure evaluation means (FIG. 2) evaluates that drive force failure has occurred in the right drive system.
   As a result, even when drive force failure occurs, a difference in drive force between the left and right sides can be suppressed, whereby occurrence of unintended behavior of the vehicle can be avoided.
(4) A vehicle speed detection means (left and right front wheel rotation sensors) 5A and 5B for detecting a vehicle speed is provided,
   the drive force control means (step S12 to step S21) setting a value smaller than or equal to a predetermined threshold as an output torque instruction value applied to the right drive means (right motor/generator) 2B when the drive force failure evaluation means evaluates that drive force failure has occurred in the left drive system and a vehicle body speed (N1 vehicle body speed) determined based on the second left rotation speed (driving wheel rotation speed N1) is greater than or equal to the vehicle speed, and
   setting a value smaller than or equal to a predetermined threshold as an output torque instruction value applied to the left drive means (left motor/generator 2A) when the drive force failure evaluation means evaluates that drive force failure has occurred in the right drive system and a vehicle body speed (N1 vehicle body speed) determined based on the second right rotation speed (driving wheel rotation speed N1) is greater than or equal to the vehicle speed.
   As a result, even when drive force failure occurs, a difference in drive force between the left and right sides can be suppressed, whereby occurrence of unintended behavior of the vehicle can be avoided.
(5) The vehicle speed detection means (left and right front wheel rotation sensors) 5A and 5B for detecting a vehicle speed and a hydraulic brake means (hydraulic brake unit) 3 for separately braking the left driving wheel RL and the right driving wheel RR is provided,
   the drive force control means (step S12 to step S21) applying a hydraulic brake force to the right driving wheel RR when the drive force failure evaluation means evaluates that drive force failure has occurred in the left drive system, a vehicle body speed (N1 vehicle body speed) determined based on the second left rotation speed (driving wheel rotation speed N1) being lower than the vehicle speed, and the second left rotation speed (driving wheel, rotation speed N1) being lower than the second right rotation speed (normally operating driving wheel rotation speed), and
   applying a hydraulic brake force to the left driving wheel RL when the drive force failure evaluation means (FIG. 2) evaluates that drive force failure has occurred in the right drive system, a vehicle body speed (N1 vehicle body speed) determined based on the second right rotation speed (driving wheel rotation speed N1) being lower than the vehicle speed, and the second right rotation speed (driving wheel rotation speed N1) being lower than the second left rotation speed (normally operating driving wheel rotation speed).
   As a result, even when drive force failure occurs along with an increase in friction on the driving wheel side, friction balance between the left and right driving wheels can be maintained, whereby stability of the vehicle can be ensured.
(6) A driven wheel rotation speed detection means (left and right front wheel rotation sensors) 5A and 5B for detecting rotation speeds of driven wheels (left and right front wheels) FL, FR is provided, and
   the drive force failure evaluation means (FIG. 2) making drive force failure evaluation when a difference in rotation speed produced between a driven wheel rotation speed N3 detected by the driven wheel rotation speed detection means 5A and 5B and the second left rotation speed (driving wheel rotation speed N1) detected by the second left rotation speed detection means (left rear wheel rotation sensor) 6A is smaller than a predetermined value (preset value B) or when a difference in rotation speed produced between the driven wheel rotation speed N3 detected by the driven wheel rotation speed detection means 5A and 5B and the second right rotation speed (driving wheel rotation speed N1) detected by the second right rotation speed detection means (right rear wheel rotation sensor) 6B is smaller than the predetermined value (preset value B).
   As a result, cross monitoring between the rotation sensors can always be performed, and drive force failure evaluation can be made when abnormality of any of the rotation sensors occurs, whereby incorrect evaluation due to sensor abnormality can be avoided.
(7) A steering angle detection means (steering angle sensor) 8 for detecting a steering angle (steering mechanism) 7 is provided,
   the drive force failure evaluation means (FIG. 2) making drive force failure evaluation when a detected steering angle θ of the steering 7 is smaller than a predetermined value (preset value A).
   As a result, no drive force failure evaluation is made when steering operation produces a temporary difference in rotation speed, whereby incorrect evaluation can be avoided.
(8) The left drive means and the right drive means are formed of electric motors (left and right motor/generators) 2A and 2B,
   the first left rotation speed detection means 4A is formed of a rotor rotation speed detector (resolver) that detects a rotation speed of a rotor of the electric motor 2A,
   the second left rotation speed detection means 6A is formed of a wheel rotation speed detector (ABS sensor) that detects a rotation speed of the left driving wheel RL,
   the first right rotation speed detection means 4B is formed of a rotor rotation speed detector (resolver) that detects a rotation speed of a rotor of the electric motor 2B, and
   the second right rotation speed detection means 6B is formed of a wheel rotation speed detector (ABS sensor) that detects a rotation speed of the right driving wheel RR.

As a result, the rotation speed detection means can be disposed at locations close to both ends of the drive systems, whereby drive force failure evaluation can be made in correspondence with a defective portion present over a wide range, and an increase in cost can be suppressed by using existing sensors.

The drive control apparatus for a vehicle according to the invention has been described above with reference to the first embodiment, but the specific configuration of the apparatus is not limited to that described in the first embodiment. Design changes, additions, and other modifications can be made thereto to the extent that they do not depart from the substance of the invention defined by the claims.

In the first embodiment 1, the drive force failure evaluation is made based on the difference in rotation speed (drive system differential rotation ΔN) between the rotation speed of the rotor of the left motor/generator 2A (drive source rotation speed N2) and the rotation speed of the left rear wheel RL (driving wheel rotation speed N1). However, the drive force failure evaluation is not necessarily made this way, and it may be evaluated that drive force failure has occurred, for example, when an integral of the differential rotation with time is greater than or equal to an evaluation threshold.

In this case, drive force failure evaluation can be made quickly even when the apparatus is so operated that the drive system differential rotation ΔN is very small. The drive force failure evaluation may still instead be made based on a rotation speed ratio between the rotation speed of the rotor of the left motor/generator 2A (drive source rotation speed N2) and the rotation speed of the left rear wheel RL (driving wheel rotation speed N1).

Further, in the drive control apparatus for a vehicle according to the first embodiment, it is evaluated that drive force failure has occurred, and the N1 vehicle body speed is higher than or equal to the vehicle speed and/or the driving wheel rotation speed N1 is higher than or equal to the normally operating driving wheel rotation speed, the value of the current supplied to each of the motor/generators 2A and 2B is reduced to zero, and then an alarm is outputted to the driver. Instead, after it is evaluated that drive force failure has occurred, the supplied current value to zero is reduced, but only an alarm is issued to the driver.

In this case as well, the driver is allowed to recognize that drive force failure has occurred, whereby the driver can be prompted to control the behavior of the vehicle.

Further, when it is evaluated that drive force failure has occurred, and the N1 vehicle body speed is higher than or equal to the vehicle speed and/or the driving wheel rotation speed N1 is higher than or equal to the normally operating driving wheel rotation speed, the value of the current supplied to each of the motor/generators 2A and 2B is reduced to zero. The supplied current value may instead be set at a value smaller than or equal to a predetermined threshold set in advance, and the threshold may be gradually reduced. As a result, the output torque from each of the drive sources can be gradually reduced, which can reduce the degree of uncomfortable sensation the drive may feel.

In the drive control apparatus for a vehicle according to the first embodiment, the drive force failure evaluation is alternately made for the left drive system and the right drive system. Instead, the drive force failure evaluation for the left and right drive systems may be made at the same time.

Further, each of the left and right motor rotation sensors 4A, 4B is not limited to a resolver that detects a rotor rotation speed and may, for example, be a sensor that detects a rotation speed of a motor output shaft. Moreover, each of the left and right rear wheel rotation sensors 6A, 6B is not limited to an ABS sensor and may, for example, be a sensor that detects a rotation speed of an axle shaft.

Further, the rotation speed sensor that detects the rotation speed on the side where the drive source operates and/or the rotation speed sensor that detects the rotation speed on the side where the driving wheel rotates may be formed of a plurality of sensors. In this case, it may be evaluated that drive force failure has occurred when there is a difference between output values from the rotations sensors.

In the first embodiment, the drive control apparatus according to the invention is used in the in-wheel motor vehicle 1, in which the left and right motor/generators 2A, 2B, each of which serves as a traveling drive source, are incorporated in the left and right rear wheels RL, RR by way of example, but the drive control apparatus is not necessarily used in an in-wheel motor vehicle. The drive control apparatus according to the invention can also be used, for example, in a hybrid vehicle that also uses an engine as a traveling drive source, a fuel battery vehicle that uses a fuel battery as a motor power source, and an engine vehicle that includes only an engine as a drive source as long as a pair of driving wheels disposed on the left and right sides in these vehicles are driven independently of each other.

### Cross-References to Related Applications

The present application claims priority based on Japanese Patent Application No. 2012-38670 applied to Japan Patent Office on February 24, 2012, and contents disclosed therein are entirely incorporated herein by reference.

## Claims

1. A drive control apparatus for a vehicle, the apparatus **characterized in** comprising:
a left driving wheel and a right driving wheel disposed on left and right sides of the vehicle;
a left drive means for driving the left driving wheel;
a right drive means for driving the right driving wheel;
a first left rotation speed detection means for detecting a rotation speed on the side where the left drive means operates, the first left rotation speed detection means being provided in a left drive system ranging from the left drive means to the left driving wheel;
a second left rotation speed detection means for detecting a rotation speed on the left driving wheel side, the second left rotation speed detection means being provided in the left drive system;
a first right rotation speed detection means for detecting a rotation speed on the side where the right drive means operates, the first right rotation speed detection means being provided in a right drive system ranging from the right drive means to the right driving wheel;
a second right rotation speed detection means for detecting a rotation speed on the right driving wheel side, the second right rotation speed detection means being provided in the right drive system; and
a drive force failure evaluation means for evaluating that drive force failure has occurred in the left drive system when a difference in rotation speed produced between a first left rotation speed detected by the first left rotation speed detection means and a second left rotation speed detected by the second left rotation speed detection means is greater than or equal to a predetermined threshold, and evaluating that drive force failure has occurred in the right drive system when a difference in rotation speed produced between a first right rotation speed detected by the first right rotation speed detection means and a second right rotation speed detected by the second right rotation speed detection means is greater than or equal to the threshold.

2. The drive control apparatus for a vehicle as recited in claim 1, **characterized in that**:
the drive force failure evaluation means sets a first threshold as the threshold when the second left rotation speed or the second right rotation speed is smaller than a predetermined rotation speed, and sets a second threshold smaller than the first threshold as the threshold when the second left rotation speed or the second right rotation speed is greater than or equal to the predetermined rotation speed.

3. The drive control apparatus for a vehicle as recited in claim 1 or 2, **characterized in that**:
the drive force failure evaluation means includes a drive force control means for performing a control for reducing a drive force transmitted from the right driving wheel to a road surface when the drive force failure evaluation means evaluates that drive force failure has occurred in the left drive system, and
performs control of reducing a drive force transmitted from the left driving wheel to the road surface when the drive force failure evaluation means evaluates that drive force failure has occurred in the right drive system.

4. The drive control apparatus for a vehicle as recited in claim 3, **characterized in** further comprising:
a vehicle speed detection means for detecting a vehicle speed,
the drive force control means setting a value smaller than or equal to a predetermined threshold as an output torque instruction value applied to the right drive means when the drive force failure evaluation means evaluates that drive force failure has occurred in the left drive system and a vehicle body speed determined based on the second left rotation speed is greater than or equal to the vehicle speed, and
setting a value smaller than or equal to a predetermined threshold as an output torque instruction value applied to the left drive means when the drive force failure evaluation means evaluates that drive force failure has occurred in the right drive system and a vehicle body speed determined based on the second right rotation speed is greater than or equal to the vehicle speed.

5. The drive control apparatus for a vehicle as recited in claim 3 or 4, **characterized in** further comprising:
the vehicle speed detection means for detecting a vehicle speed; and
a hydraulic brake means for separately braking the left driving wheel and the right driving wheel,
the drive force control means applying a hydraulic brake force to the right driving wheel when the drive force failure evaluation means evaluates that drive force failure has occurred in the left drive system, a vehicle body speed determined based on the second left rotation speed being lower than the vehicle speed, and the second left rotation speed being lower than the second right rotation speed, and
applying a hydraulic brake force to the left driving wheel when the drive force failure evaluation means evaluates that drive force failure has occurred in the right drive system, a vehicle body speed determined based on the second right rotation speed being lower than the vehicle speed, and the second right rotation speed being lower than the second left rotation speed.

6. The drive control apparatus for a vehicle as recited in any of claims 1 to 5, **characterized in** further comprising:
a driven wheel rotation speed detection means for detecting a rotation speed of a driven wheel,
the drive force failure evaluation means making a drive force failure evaluation when a difference in rotation speed produced between a driven wheel rotation speed detected by the driven wheel rotation speed detection means and the second left rotation speed detected by the second left rotation speed detection means is smaller than a predetermined value, or when a difference in rotation speed produced between the driven wheel rotation speed detected by the driven wheel rotation speed detection means and the second right rotation speed detected by the second right rotation speed detection means is smaller than the predetermined value.

7. The drive control apparatus for a vehicle as recited in any of claims 1 to 6, **characterized in** further comprising:
a steering angle detection means for detecting a steering angle,
the drive force failure evaluation means making a drive force failure evaluation when a detected steering angle is smaller than a predetermined value.

8. The drive control apparatus for a vehicle as recited in any of claims 1 to 7, **characterized in that**
the left drive means and the right drive means are formed of electric motors,
the first left rotation speed detection means is formed of a rotor rotation speed detector for detecting a rotation speed of a rotor of the corresponding electric motor,
the second left rotation speed detection means is formed of a wheel rotation speed detector for detecting a rotation speed of the left driving wheel,
the first right rotation speed detection means is formed of a rotor rotation speed detector for detecting a rotation speed of a rotor of the corresponding electric motor, and
the second right rotation speed detection means is formed of a wheel rotation speed detector for detecting a rotation speed of the right driving wheel.

## Amended claims

### Amended claims under Art. 19.1 PCT

**1.** (Amended) A drive control apparatus for a vehicle, the apparatus **characterized in** comprising:
a left driving wheel and a right driving wheel disposed on left and right sides of the vehicle;
a left drive means for driving the left driving wheel;
a right drive means for driving the right driving wheel;
a first left rotation speed detection means for detecting a rotation speed on the side where the left drive means operates, the first left rotation speed detection means being provided in a left drive system ranging from the left drive means to the left driving wheel;
a second left rotation speed detection means for detecting a rotation speed on the left driving wheel side, the second left rotation speed detection means being provided in the left drive system;
a first right rotation speed detection means for detecting a rotation speed on the side where the right drive means operates, the first right rotation speed detection means being provided in a right drive system ranging from the right drive means to the right driving wheel;
a second right rotation speed detection means for detecting a rotation speed on the right driving wheel side, the second right rotation speed detection means being provided in the right drive system; and
a drive force failure evaluation means for evaluating that drive force failure has occurred in the left drive system when a difference in rotation speed produced between a first left rotation speed detected by the first left rotation speed detection means and a second left rotation speed detected by the second left rotation speed detection means is greater than or equal to a predetermined threshold, and evaluating that drive force failure has occurred in the right drive system when a difference in rotation speed produced between a first right rotation speed detected by the first right rotation speed detection means and a second right rotation speed detected by the second right rotation speed detection means is greater than or equal to the threshold,
the drive force failure evaluation means including a drive force control means for performing a control for reducing a drive force transmitted from the right driving wheel to a road surface when the drive force failure evaluation means evaluates that drive force failure has occurred in the left drive system, and
performing a control for reducing a drive force transmitted from the left driving wheel to the road surface when the drive force failure evaluation means evaluates that drive force failure has occurred in the right drive system.

**2.** The drive control apparatus for a vehicle as in claim 1, **characterized in that**:
the drive force failure evaluation means sets a first threshold as the threshold when the second left rotation speed or the second right rotation speed is lower than a predetermined rotation speed, and sets a second threshold smaller than the first threshold as the threshold when the second left rotation speed or the second right rotation speed is greater than or equal to the predetermined rotation speed.

**3.** (Deleted)

**4.** (Amended) The drive control apparatus for a vehicle as in claim 1 or 2, **characterized in** further comprising:
a vehicle speed detection means for detecting a vehicle speed,
the drive force control means setting a value lower than or equal to a predetermined threshold as an output torque instruction value applied to the right drive means in the case that, when the drive force failure evaluation means evaluates that drive force failure has occurred in the left drive system, the vehicle body speed determined on the basis of the second left rotation speed is greater than or equal to the vehicle speed, and
setting a value lower than or equal to a predetermined threshold as an output torque instruction value applied to the left drive means in the case that, when the drive force failure evaluation means evaluates that drive force failure has occurred in the right drive system, the vehicle body speed determined on the basis of the second right rotation speed is greater than or equal to the vehicle speed.

**5.** (Amended) The drive control apparatus for a vehicle as in any of claims 1, 2, and 4, **characterized in** further comprising:
the vehicle speed detection means for detecting vehicle speed; and
a hydraulic brake means for separately braking the left driving wheel and the right driving wheel,
the drive force control means applying a hydraulic brake force to the right driving wheel in the case that, when the drive force failure evaluation means evaluates that drive force failure has occurred in the left drive system, the vehicle body speed determined on the basis of the second left rotation speed is lower than the vehicle speed and the second left rotation speed is lower than the second right rotation speed, and
applying a hydraulic brake force to the left driving wheel in the case that, when the drive force failure evaluation means evaluates that drive force failure has occurred in the right drive system, the vehicle body speed determined on the basis of the second right rotation speed is lower than the vehicle speed, and the second right rotation speed is lower than the second left rotation speed.

**6.** (Amended) The drive control apparatus for a vehicle as in any of claims 1, 2, 4, and 5, **characterized in** further comprising:
a driven wheel rotation speed detection means for detecting a rotation speed of a driven wheel,
the drive force failure evaluation means making a drive force failure evaluation when a difference in rotation speed produced between a driven wheel rotation speed detected by the driven wheel rotation speed detection means and the second left rotation speed detected by the second left rotation speed detection means is smaller than a predetermined value, or when a difference in rotation speed produced between the driven wheel rotation speed detected by the driven wheel rotation speed detection means and the second right rotation speed detected by the second right rotation speed detection means is smaller than the predetermined value.

**7.** (Amended) The drive control apparatus for a vehicle as in any of claims 1, 2, 4, 5, and 6, **characterized in** further comprising:
a steering angle detection means for detecting a steering angle,
the drive force failure evaluation means making a drive force failure evaluation when the detected steering angle is smaller than a predetermined value.

**8.** (Amended) The drive control apparatus for a vehicle as in any of claims 1, 2, 4, 5, 6, and 7, **characterized in that**
the left drive means and the right drive means are formed of electric motors,
the first left rotation speed detection means is formed of a rotor rotation speed detector for detecting a rotation speed of a rotor of the corresponding electric motor,
the second left rotation speed detection means is formed of a wheel rotation speed detector for detecting a rotation speed of the left driving wheel,
the first right rotation speed detection means is formed of a rotor rotation speed detector for detecting a rotation speed of a rotor of the corresponding electric motor, and
the second right rotation speed detection means is formed of a wheel rotation speed detector for detecting a rotation speed of the right driving wheel.
